# EUROPÄISCHE PATENTSCHRIFT

(11) **EP 3 285 626 B1**
(45) Veröffentlichungstag und Bekanntmachung des Hinweises auf die Patenterteilung: **05.01.2022**
(21) Anmeldenummer: 16719334.1
(22) Anmeldetag: 18.04.2016
(51) Int. Cl.: A47J 43/07, B01F 7/00

(54) **STABMIXERMESSER MIT FRÄSKANTE**
HAND BLENDER BLADE WITH MILLING EDGE
COUTEAU DE MIXEUR PLONGEANT À BORD DE FRAISAGE

(30) Priorität: 21.04.2015 DE 102015207197
(43) Veröffentlichungstag der Anmeldung: 28.02.2018
(73) Patentinhaber: De'Longhi Braun Household GmbH, 63263 Neu-Isenburg (DE)
(72) Erfinder: WOLF, Jürgen, 65830 Kriftel (DE); STENGLEIN, Christian, 60438 Frankfurt am Main (DE); BUHL-REMMEL, Sabine, 65824 Schwalbach am Taunus (DE); DEXHEIMER, Christian, 63225 Langen (DE); KLEEMANN, Christof, 61350 Bad Homburg (DE)
(74) Vertreter: Hoffmann Eitle
(86) Internationale Anmeldenummer: PCT/EP2016/058531
(87) Internationale Veröffentlichungsnummer: WO 2016/169885

(56) Entgegenhaltungen:
- EP-A1- 2 127 577
- WO-A1-2014/022876
- ES-A6- 2 005 071

## Beschreibung

Die vorliegende Erfindung betrifft einen Stabmixer umfassend eine Klingenanordnung für ein Haushaltsgerät zum Schneiden und Zerkleinern von Nahrungsmitteln gemäß dem Oberbegriff des Anspruchs 1.

Stabmixer sind im Allgemeinen mit einer sich schnell drehenden Klinge ausgestattet, um Flüssigkeiten zu mixen und feste Speisen zu zerkleinern. Die Klingen bestehen aus Metallblech und besitzen zwei oder mehr scharfe Messer. Bei einigen Geräten können die einzelnen Messer auf gleiche oder auch unterschiedliche Weise aus der Rotationsebene heraus abgewinkelt und eventuell axial zueinander versetzt sein. Beispielhaft kann hierzu auf Geräte bzw. Klingenanordnungen verwiesen werden, wie sie in der DE 197 50 813 A1 beschrieben sind.

Die Zerkleinerung von festen Speisen erfolgt vorwiegend durch die scharfen Schneidkanten der Messer. Eine effektive Zerkleinerung kann aber nur dann stattfinden, wenn die festen Stoffe die Schneidezone der Schneidkanten kreuzen. Dies ist immer dann der Fall, wenn die festen Stoffe eine bestimmte Größe nicht überschreiten und vorteilhaft von einer Flüssigkeitsströmung in bzw. durch die Schneidzone bewegt werden. Bei den oben genannten Klingenanordnungen mit abgewinkelten Messern sind die Schneidezonen der jeweiligen Messer entsprechend ihrer Abwinkelung zur Rotationsebene geneigt. Bei unterschiedlich abgebogenen bzw. axial parallel versetzten Messern hat dann jedes Messer also eine eigene Schneidzone.

Die Mittelzone der meisten Klingen ist relativ eben und hat in Drehrichtung keine exponierten Stellen, mit denen sich feste Stoffe bearbeiten lassen. Bekannt sind Klingen, die nahe der Mitte abgekantete Elemente aufweisen. Beispiele sind in der WO 2014/022876 A1, der WO 2013/016533 A1 oder der CN 203506469 U gezeigt. Betrachtet man jedoch den rotatorischen Wirkungsbereich dieser Abkantungen, dann erkennt man, dass dieser nur eine schmale Ringform besitzt und der wesentliche Bereich der Mittelzone glatt ist. In dieser Mittelzone also findet kein Schnitt oder Materialabtrag und somit keine Zerkleinerung statt, die Mittelzone ist "passiv". Sind die festen Speisen nun so groß, dass sie ganz oder teilweise an der Mittelzone der Klinge anstoßen, dann kommen die jeweiligen Schneidzonen der Messer direkt auf der Speise zu liegen und vermögen somit die feste Speise nicht zu schneiden, weil die Klinge, und damit der ganze Stabmixer, in Drückrichtung durch die glatte Mittelzone in axialer Richtung blockiert ist. Das Verlängern der Schneidkanten der oben genannten bekannten Klingenanordnungen in die passive Mittelzone ist Bauart bedingt nicht effektiv möglich, da nahe der Welle der Winkel zwischen Schlagrichtung der Messerschneide, das heißt der Normalen auf die Schneide, und der Rotationsrichtung der Schneide fast 90° beträgt und somit dort keine Schneidwirkung entfaltet werden kann. Auch sind die Schnittgeschwindigkeiten nahe der Mitte gering. In solchen Fällen erhöht der Benutzer zumeist die Druckkraft und versucht die feste Speise so zu quetschen und zu deformieren, dass ein Eindringen der Messer stattfinden kann. Dies ist beschwerlich, kostet Zeit und macht bestimmte Anwendungen auch ganz unmöglich. Selbst wenn bei einigen Klingenanordnungen, wie bei der CN 203506469 U, abgekantete Elemente nahe der Drehmitte der Klinge angeordnet sind, so sind diese in tangentialer Richtung orientiert (sie erstrecken sich in Drehrichtung) und schneiden einen engwandigen Ringkörper in die Speise. Das führt also ebenfalls nicht zu einer flächenhaften Abtragung der Speise in vertikaler Richtung. Die Speise blockiert weiterhin auf der passiven Mittelzone. Aus der DE 1 037 088 A ist schließlich eine Zerkleinerungsvorrichtung bekannt, welche ein mit um etwa 45° nach oben gebogenen Klingen versehenes nicht rotierendes Ringmesser sowie ein darunter angeordnetes umlaufendes Schneidmesser aufweist. Die DE 698 26 868 T2 zeigt einen Stabmixer mit flachem Rührmesser und verlängerbarem Schaft. Die EP 2 127 577 A1 offenbart einen Mixer mit einer Klingenanordnung, die Rippen aufweist.

### Darstellung der Erfindung

Um die oben genannten Nachteile zu überwinden, besteht die Aufgabe der vorliegenden Erfindung darin, die "passive" Mittelzone soweit wie möglich zu "aktivieren", das heißt sie ganz oder teilweise zu einer Material (Speisen) zerkleinernden Zone umzuwandeln. Diese Aufgabe wird gemäß der Erfindung durch einen Stabmixer gemäß Anspruch 1 gelöst. Vorteilhafte Ausführungsformen ergeben sich aus den Unteransprüchen.

Der erfindungsgemäße Stabmixer umfasst eine drehbare Klinge mit einer an der Drehmitte der Klinge liegenden Nabe zur Aufnahme einer Welle, wobei die Klinge zumindest ein sich radial erstreckendes Messer aufweist, welches eine an einer in Rotationsrichtung vorderen Seite liegende und im Umlauf eine kreisförmige Schneidzone definierende Schneidkante besitzt, dadurch gekennzeichnet, dass die Klinge eine Fräsrippe aufweist, die in einer axialen Richtung aus dem Messer emporsteht und so orientiert ist, dass sie im Umlauf eine Fräswirkung erzeugt und eine entsprechende Fräszone definiert, die sich von der Nabe bis zur Schneidzone des Messers erstreckt. Die Fräszone und die Schneidzone grenzen dabei unmittelbar aneinander an, so dass keine passiven Zonen dazwischen entstehen. Somit wird die durch den Umlauf der Schneidkante definierte Schneidzone nach innen zur Nabe hin durch eine Fräszone verlängert und dadurch insgesamt die aktive Zone der Zerkleinerung im Vergleich zu herkömmlichen Klingen vergrößert. Grundidee dabei ist, dass sich die Schneidzone nur bis zu einem Punkt radial nach innen erstreckt, wo noch eine akzeptable Schnittgeschwindigkeit erreicht werden kann, und sich dann daran unmittelbar anschließend die durch die Fräsrippe definierte Fräszone erstreckt. Bevorzugt erstreckt sich die Fräszone bis zur Schneidzone des Messers, ohne diese wesentlich zu überlappen. Da eine scharfe Abgrenzung zwischen dem (radial inneren) Ende der Schneidzone und dem (radial äußeren) Ende der Fräszone aufgrund des strukturellen Übergangs von Schneidkante zu Fräsrippe nicht exakt möglich ist, ist unter "keiner Überlappung" der beiden Zonen zu verstehen, dass sich die von der noch unveränderten Schneidkante (vor dem Übergang) definierte Schneidzone und die von der noch unveränderten Fräskante (vor dem Übergang) definierte Fräszone nicht überlappen. Anders ausgedrückt geht die Fräszone in die Schneidzone in dem Sinne über, dass bei dem Übergang die Fräswirkung der Fräsrippe auf null abnimmt und die Schneidwirkung der Schneidkante von null ausgehend zunimmt.

Die in axialer Richtung aus dem Messer emporstehende Fräskante ist aufgrund ihrer Erstreckung nicht wie die abgekanteten Elemente im Stand der Technik im Wesentlichen entlang einer Tangente zur Drehrichtung der Klinge orientiert, das heißt mit einer im Wesentlichen senkrecht zur Drehrichtung orientierten Schlagrichtung, sondern besitzt entlang ihrer Erstreckung zumindest bereichsweise Schlagrichtungen, die zur Drehrichtung einen spitzen Winkel von 45° oder weniger, bevorzugt 35° oder weniger bilden ("Schlagwinkel"). Unter Schlagrichtung wird auf dem Gebiet der Schneidklingen die Normale auf die Schlagkante bzw. Schlagfläche verstanden, das heißt diejenige Richtung, unter welcher die Schlagkante (Schneidkante) einer Klinge das zu schneidende Material trifft, beispielsweise beträgt der Winkel zwischen Schlagrichtung und Drehrichtung bei einer radial verlaufenden Kante 0°. Bei der Fräsrippe ist die Schlagfläche die in die Drehebene weisende Seitenfläche der Fräsrippe. Bevorzugt besitzt die Fräskante entlang ihrer gesamten Erstreckung einen Schlagwinkel von 45° oder weniger, besonders bevorzugt 35° oder weniger.

Als Schneidkante versteht die vorliegende Erfindung eine horizontal schneidend wirkende Kante des Messers, welche also in der Lage ist, Schnitte in der Rotationsebene zu bewirken. Die Schneidkante wird erzeugt, in dem das Klingenblech unter einem (Tiefzieh-)Winkel von beispielsweise 20° tiefgezogen und anschließend scharf geschliffen wird. Der Schliff erfolgt dabei in der Rotationsebene der Klinge, so dass der genannte Winkel somit den sogenannten Keilwinkel der Klinge, das heißt den Winkel zwischen der Rotationsebene und einer (oberen oder unteren) Oberfläche der Schneidkante, bestimmt.

Die axiale Richtung ist eine zur Rotationsebene des Messers senkrechte Richtung. Die Nabe ist im Sinne der vorliegenden Erfindung derjenige Bereich der Klinge, welcher zum einen die Welle in einer Aufnahme aufnimmt, also beispielsweise eine für das Einsetzen und Befestigen der Welle geeignete Öffnung bzw. Befestigungsmöglichkeit aufweist, und zum anderen der die Aufnahme unmittelbar umgebende Bereich, welcher für die strukturelle Festigkeit der Anbindung von Welle zu Klinge/Messer notwendig ist. Dieser Bereich ist bei den bekannten Klingen zumeist eine kreisförmige Fläche, aus welcher sich dann das oder die Messer im Wesentlichen radial erstrecken, kann aber gemäß der vorliegenden Erfindung auch von der Kreisform abweichende Geometrien aufweisen.

Durch die erfindungsgemäße Klingenanordnung wird die Funktionalität der Klinge auf sehr vorteilhafte Weise erweitert. Neben dem Schneiden mit den scharfen Schneidkanten des Messers der Klinge in Umfangsrichtung ist auch eine effektive Fräsfunktionalität der Fräsrippe in Drückrichtung gegeben. Diese wiederrum ermöglicht es dem Messer, feste Speisen besser und schneller zu schneiden. Die Wirkung der erfindungsgemäßen Klingenanordnung beruht darauf, dass feste Speisen nunmehr durch leichten Druck und Rotation weggefräst werden können und sich dadurch die Schneidzonen der Messer weiter in die Speise verschieben können. Dies wird dadurch ermöglicht, dass die neuartige Anordnung der Fräsrippe die "passive" Mittelzone so klein wie möglich macht. Selbst bei Klingen mit nur einseitig verlaufender Fräsrippe (das heißt einer nur auf einem Messer vorgesehenen Fräsrippe) verbleibt aufgrund der Erstreckung der Fräsrippe von der Nabe zur Schneidkante nur noch eine sehr kleine, die Aufnahme der Welle umgebende passive Zone, deren Wirkungsbereich eine Kreisfläche mit einem äußerst kleinen Durchmesser ist. Die zum Eindringen in die Speise notwendige Druckkraft ist daher ebenfalls entsprechend gering.

Bevorzugt ist vorgesehen, dass die Fräsrippe derart verläuft, dass ihr Schlagwinkel zwischen 0° und 35° beträgt. Zum Beispiel beträgt der Schlagwinkel am inneren Ende der Fräskante 35° und nimmt nach außen hin ab. Bei derartigen Schlagwinkeln kann eine optimale Fräswirkung erzielt werden, wobei man bei der Positionierung der Fräskante am Messer bzw. an der Nabe relativ uneingeschränkt ist. Beispielsweise ist es denkbar, dass die Fräsrippe im Wesentlichen radial in der Rotationsebene der Klinge verläuft. Auf diese Weise beträgt der Schlagwinkel der Fräskante praktisch 0° und diese besitzt somit die größtmögliche Fräswirkung. Mit diesen Maßnahmen wird eine sehr effektive Klingenanordnung gewährleistet, die auch in sehr feste Speisen ohne großen Kraftaufwand eindringen kann.

In einer bevorzugten Ausführungsform weist die Klinge zwei gegenüberliegende Messer auf und die Fräsrippe verläuft über die Drehmitte der Klinge. Diese Ausgestaltung besitzt den Vorteil, dass praktisch keine passive Mittelzone mehr vorhanden ist, da die Fräszone den gesamten Bereich innerhalb der ringförmigen Schneidzone einnimmt. Zudem hebt sich die Klingenanordnung aufgrund der guten Sichtbarkeit der beidseitigen, radial verlaufenden Fräsrippe von herkömmlichen Klingenanordnungen ab, was verkaufsfördernde Wirkung haben kann.

Gemäß einer besonders bevorzugten Ausführungsform erstreckt sich die Fräsrippe von einer Position am Rand der Nabe, die in Bezug auf die Drehmitte im Wesentlichen unter einem Winkel von bevorzugt 45° zur radialen Mittelachse des Messers liegt, bis zur Schneidkante. Die Fräsrippe wirkt somit als Verlängerung der Schneidkante. Dadurch, dass die Fräsrippe an einer um 45° von der Erstreckung des Klingenmessers rotierten Position beginnt und sich dann entlang des Randes der Nabe und der Vorderkante des Messers zur Schneidkante erstreckt, nimmt der Schlagwinkel entlang der Fräsrippe von fast 90° am inneren Ende der Rippe nach außen hin ab und fällt unter 45° bevor die Fräsrippe die Schneidkante erreicht, wodurch die Fräswirkung im Vergleich zur radial orientierten Rippe mit im Wesentlichen 0° Schlagwinkel zwar etwas geringer ausfällt, jedoch die Gefahr des Mitrotierens der Speisen eliminiert wird. So kann ein effektives Fräsen der Speise gewährleistet werden. Außerdem werden Bereiche (z.B. Ecken oder kleine wenige Millimeter große Spalten zwischen Fräskante und Schneidkante) vermieden, an denen sich Nahrungsmittelreste sammeln können, und somit wird die Reinigung der Klinge vereinfacht. Schließlich können durch die exzentrische Anordnung der Fräskante relativ zur Drehmitte größere Nahrungsmittelstückchen nach außen in die Schneidzone transportiert werden, wo sie effektiver geschnitten werden können.

Bei dieser Ausführungsform hat es sich als vorteilhaft erwiesen, dass der Keilwinkel zwischen der Rotationsebene und einer Oberfläche des Messers von der Schneidkante zur Fräsrippe kontinuierlich von 20° bis auf 90° anwächst. Dies kann dadurch erreicht werden, dass der Tiefziehwinkel im Bereich der Fräsrippe bis auf max. 90° vergrößert wird. So kann die entstehende Schleiffläche möglichst schmal ausgestaltet und damit die Fräswirkung vergrößert werden.

In einer besonders bevorzugten Ausführungsform ist die Fräsrippe an der in
Rotationsrichtung hinteren Seite des Messers angeordnet. Dies hat fertigungstechnische Vorteile, da die Fräskante an einer Seite des das Messer bildenden Blechrohlings hochgebogen wird, die von der Seite der Schneidkante entfernt ist und der entsprechende Bereich durch das Hochbiegen somit nicht beeinträchtigt wird. Auch hier lassen sich Ecken vermeiden, in denen sich Nahrungsmittelreste sammeln könnten, und die Klingenanordnung kann leicht gereinigt werden. Des Weiteren kann durch die räumlich getrennte Ausgestaltung die Fräsrippe als umgebogene Blechzunge bei der Herstellung separat von der Schneidkante geschliffen werden. Die exzentrische Anordnung der Fräsrippe schließlich erlaubt auch in diesem Fall den Transport größerer Nahrungsmittelstückchen nach außen.

Bevorzugt ist, dass die Schneidkante und die Fräsrippe eine möglichst kleine projektierte Fläche in Drückrichtung aufweisen, um die zum vertikalen Eindringen in die Speisen notwendige Kraft zu minimieren. Die Drückrichtung ist dabei diejenige Richtung, in welcher der Benutzer den Stabmixer nach unten in die Nahrungsmittel drückt.

Um den Beitrag der Fräsrippe zur Schleiffläche zu minimieren, entspricht die Dicke der Fräskante (in der Rotationsebene) bevorzugt der Dicke des die Klinge bildenden Blechs. Dies wird zum Beispiel dadurch erzielt, dass die Fräsrippe aus dem Klingenblech herausgebogen wird. Derartig herausgebogene Fräsrippen haben auch den Vorteil, dass in der Produktion im Vergleich zu herkömmlichen Messern keine Zusatzteile und keine wesentlichen Änderungen im Produktionsprozess notwendig sind.

Die Schneidkante besitzt schließlich vorteilhafter Weise einen spitzen Keilwinkel von weniger als 45°, besonders bevorzugt 20°, wodurch die Schneidkante besonders effektiv in der Rotationsebene schneiden kann. Der Keilwinkel ist dabei der Winkel zwischen der Rotationsebene und einer (oberen oder unteren) Oberfläche der Schneidkante und wird wie zuvor bereits erläutert erhalten.

Es ist angedacht, die oben genannte Klingenanordnung vorteilhaft in einem Standmixer einzubauen. Allerdings entwickelt die erfindungsgemäße Klingenanordnung vor allem Potenzial bei Einbau in einen Stabmixer. So umfasst ein erfindungsgemäßer Stabmixer die oben genannte Klingenanordnung. Darüber hinaus ist es besonders bevorzugt, dass der Stabmixer einen in einem Motorgehäuse angeordneten Antriebsmotor, einen Schaft, in welchem die mit dem Antriebsmotor drehstarr verbindbare Welle gelagert ist und der in eine innere und äußere Baugruppe unterteilt ist, wobei die äußere Baugruppe am vom Motorgehäuse entfernten Ende eine Abschirmung aufweist, welche die fest mit der Welle verbundene Klinge umgibt, umfasst, wobei die Welle in der inneren Baugruppe axial unbeweglich geführt wird und die innere Baugruppe gegenüber der äußeren Baugruppe axial beweglich ist.

Im Folgenden wird die vom Antriebsteil zum Motorgehäuse weisende Richtung auch als "oben" und die entgegengesetzte Richtung als "unten" bezeichnet.

Der erfindungsgemäße Schaft wird somit im Wesentlichen in zwei Teile bzw. zwei Baugruppen unterteilt, eine innere und eine äußere Baugruppe. Die innere Baugruppe dient als "feste" Schnittstelle zu dem bekannten Motorgehäuse und übernimmt weitere Funktionen, die nachfolgend beschrieben werden. Die äußere Baugruppe umfasst den Großteil der Außengeometrie, sowie die Abschirmung am unteren Ende, zum Beispiel in Form einer sogenannten Glocke. Auch diese Baugruppe erfüllt darüber hinaus noch weitere Funktionen. Dadurch, dass die äußere Baugruppe gegenüber der inneren Baugruppe axial beweglich ist, ist der Schaft teleskopartig aufgebaut, was auch das äußere Erscheinungsbild, beispielsweise im oberen Drittel der Außengeometrie prägen kann. Dieser teleskopartige Aufbau ermöglicht ein "Eintauchen" zumindest eines Teils der inneren Baugruppe in die äußere Baugruppe.

Die Klingenanordnung ist wie üblich fest mit der Welle verbunden, welche die Rotation des Motors auf das Messer überträgt. Durch die axiale Führung innerhalb der inneren Baugruppe bleibt die Verbindung zwischen Welle und Motor über den gesamten Betrieb unverändert und es kann keine axiale Bewegung zwischen innerer Baugruppe und Welle stattfinden. Da sich jedoch die äußere Baugruppe relativ zu der inneren bewegen kann, wirkt diese Bewegung auch zwischen Glocke und Messer.

Im bisherigen Stand der Technik war die feste axiale Position der Klingenanordnung in Bezug zur Abschirmung bzw. dem unteren Ende des Schafts ein Kompromiss für eine möglichst ausgeglichene Leistung in flüssigen und festen Stoffen. Das hatte zur Folge, dass beide Zustände nicht mit maximal möglicher Leistung bearbeitet werden konnten sowie die bereits oben genannten Nachteile in Kauf genommen werden mussten. Mit dem erfindungsgemäßen Stabmixer zum Rühren und Zerkleinern von Nahrungsmitteln lässt sich sowohl ein größerer Abstand der Klingenanordnung (des Messers) zum unteren Rand der Abschirmung (z.B. Glocke) realisieren, durch den in flüssigen Speisen der Ansaugeffekt und die Neigung zum Spritzen reduziert werden kann. Möchte der Benutzer indes die Schneidleistung bei festen Speisen erhöhen oder nicht bearbeitete Speiseteile erreichen, kann er wie gewohnt Druck auf den Stabmixer ausüben. Im Gegensatz zum Stand der Technik schiebt sich aber dabei die innere Baugruppe in die äußere Baugruppe, so dass die Klingenanordnung, die axial unverschieblich in der inneren Baugruppe gelagert ist, gegenüber der Abschirmung weiter nach unten exponiert wird und so besser in die zu bearbeitenden Speisen eindringen kann und selbst dicht am Behälterboden anliegende Stücke erreichen und verarbeiten kann.

Darüber hinaus zeichnet sich der erfindungsgemäße Stabmixer durch einen einfachen Aufbau, eine unkompliziertere Anwendung und leicht durchzuführende Reinigung aus.

Bevorzugt ist die Welle über ein Axiallager in der inneren Baugruppe gelagert ist und die Kraftübertragung vom Axiallager auf die Welle erfolgt über eine an der Welle angebrachte Sicherung. Diese kann beispielsweise aus einer U-Scheibe und einer Rollung bestehen, die bevorzugt unterhalb des Axiallagers vorgesehen sind, aber auch um andere Arten der Sicherung, die dem Fachmann bekannt sind. Bei der Rollung handelt es sich um eine Methode zur Erzeugung eines Formschlusses auf der Ebene des Wellendurchmessers (analog zu einem Wellensicherungsring). Dabei wird die Welle an einer Stelle durch eine parallel mitlaufende "spitze" Rolle eingeschnürt. Das vor und nach der Einschnürung verdrängte Material baut über den Wellendurchmesser auf und passt so nicht mehr durch die relativ eng anliegende U-Scheibe. Auf diese Weise wird auf einfach umsetzbare Weise sichergestellt, dass keine axiale Bewegung zwischen innerer Baugruppe und Welle möglich ist.

Weiterhin ist es von Vorteil, wenn die äußere Baugruppe an ihrem vom Motorgehäuse entfernten Ende ein radiales Gleitlager für die Welle aufweist, das bevorzugt in einer flexiblen Buchse gegenüber der äußeren Baugruppe abgestützt ist. Ein solches Radiallager ist beispielsweise eine Gleitlagerbuchse (insbesondere aus Bronze), welche keinerlei axiale Funktion besitzt, also eine gleitende Lagerung in axialer Richtung bietet. So kann das Lager in unmittelbarer Nähe des Arbeitsteils, wo der Momenteintrag am höchsten ist, die Lagerkräfte am effektivsten aufnehmen. Durch die Flexibilität der Buchse ist die Lagerbaugruppe, die die Welle im unteren Teil der äußeren Baugruppe radial fest und axial gleitend lagert, in der Lage, die in der Fertigung üblichen Toleranzen auszugleichen. Zudem reduziert diese "weiche Lagerung" die Geräuschentwicklung im Betrieb erheblich, da über diese Anbindung die Vibrationen nicht über "harte" Komponenten auf die äußere Baugruppe übertragen werden, welche dann geräuschverstärkende Wirkung hätten.

Ferner ist es bevorzugt, dass zwischen der inneren und der äußeren Baugruppe ein elastisches Element vorgesehen ist, das die äußere Baugruppe gegenüber der inneren Baugruppe axial vorspannt.

### Kurze Beschreibung der Figuren

Figur 1a zeigt eine Draufsicht von unten und Figuren 1b und 1c jeweils perspektivische Ansichten einer Klingenanordnung mit einseitiger, radialer Anordnung der Fräsrippe gemäß einer ersten Ausführungsform der Erfindung;
Figur 2 ist eine Draufsicht von unten einer zweiten Ausführungsform der Erfindung mit radial über die Mitte der Klinge verlaufender Fräsrippe;
Figuren 3a und 3b zeigen eine perspektivische Ansicht sowie eine Draufsicht von unten einer Klingenanordnung mit einer in der Verlängerung der Schneidkante zur Nabe verlaufenden Fräsrippe gemäß einer dritten Ausführungsform der Erfindung; und
Fig. 4a, 4b und 4c zeigen eine perspektivische Ansicht, eine Draufsicht von unten sowie eine Seitenansicht einer vierten Ausführungsform der Klingenanordnung mit einer einseitigen, der Schneidkante auf der Klinge gegenüberliegenden Fräsrippe;
Fig. 5 zeigt eine perspektivische Ansicht der Unterseite einer fünften Ausführungsform der Klingenanordnung, bei der im Vergleich zur Fig. 4a die Fräsrippe höher ausgebildet ist; und
Figuren 6a) und 6b) zeigen Schnittansichten des Schafts des erfindungsgemäßen Arbeitsgeräts mit der Klinge in der oberen bzw. unteren Position.

### Detaillierte Beschreibung

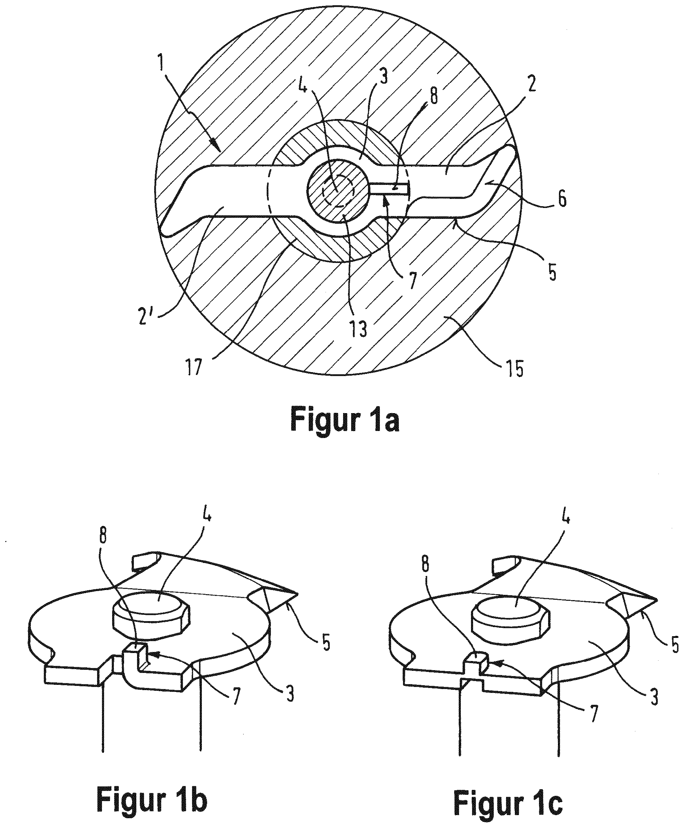

Mit Bezugnahme auf die Figuren 1a, b, c ist eine erste Ausführungsform der erfindungsgemäßen Klingenanordnung dargestellt. Eine derartige Klingenanordnung kommt in einem Stabmixer zum Einsatz und wird über eine Welle vom Elektromotor des Stabmixers angetrieben. Die Klingenanordnung rotiert dabei in einer Rotationsebene, die durch die Zeichenebene der Figur 1a gegeben ist. Die erfindungsgemäße Klingenanordnung umfasst eine Klinge 1 mit zwei diagonal gegenüberliegenden Messern 2, von denen jedes eine mit einem Keilwinkel von 20° geschliffene Schneidkante 5 besitzt. Die Messer 2, 2' sind dabei aus der Rotationsebene hinaus abgewinkelt, das Messer 2 nach unten und Messer 2' nach oben, wobei anzumerken ist, dass die Positionsangaben auf die Messer im Betriebszustand bezogen sind, die im Vergleich zu den Figuren "auf den Kopf" gestellt sind. Auf dem in der Figur la rechten Messer ist die im Betrieb nach unten und in der Figur nach oben gewandte Schleiffläche 6 sichtbar, während die Schleiffläche des linken Messers nach oben gewandt (in der Figur nach unten gewandt) und daher in dieser Draufsicht von unten nicht sichtbar ist. In der Mitte der Klinge 1 befindet sich die Nabe 3, in deren mittiger Bohrung eine axiale Welle 4 befestigt ist, welche ihre vom Motor des Stabmixers erzeugte Drehung auf die Klingenanordnung überträgt. Die Klinge 1 selbst ist beispielsweise aus einem 2mm dicken Blech hergestellt, und in der Regel aus Metall. Aber auch Keramik kommt als Material für eine derartige Klinge in Frage.

Aus dem rechten Messer steht nach unten eine Fräsrippe 7 hervor, die eine im Wesentlichen rechteckige, in die Vertikale gebogene Ausstanzung des die Klinge bildenden Blechs ist (Fig. 1b). Die Fräsrippe 7 definiert im Umlauf ausgehend von der Nabe eine ringförmige Fräszone 17, die sich bis zur Schneidzone 15 erstreckt, welche wiederum im Umlauf von der Schneidkante 5 des Schneidmessers 2 definiert wird. In der Mitte der ringförmigen Fräszone 17 verbleibt nur noch eine sehr kleine passive Mittelzone 13, in welcher die Speisen nicht abgetragen bzw. geschnitten werden. Aufgrund der geringen Größe dieser passiven Mittelzone 13 bedarf es aber nur einer geringen Kraft, um die Klingenanordnung beim Zerkleinern in die Speise hineindrücken zu können.

Wie aus der perspektivischen Ansicht der Figur 1b hervorgeht, ist die Fräsrippe 7 eine aus der Ebene des die Klinge 1 bildenden Blechs herausgestanzte abgewinkelte Zunge, welche sich somit in einer im Wesentlichen axialen Richtung aus der Rotationsebene (Schneidebene) der Klingen erstreckt. Gemäß Figur 1c kann eine derartige Fräsrippe 7 auch durch Pressen des Blechs im Bereich der Nabe 3 gebildet sein. Ebenso ist denkbar, dass sich die Fräsrippe nicht nur auf einem der vorliegend abgebildeten zwei Messer erstreckt, sondern ebenfalls auf dem anderen (in der Figur 1a linken) Messer 2' ausgebildet ist.

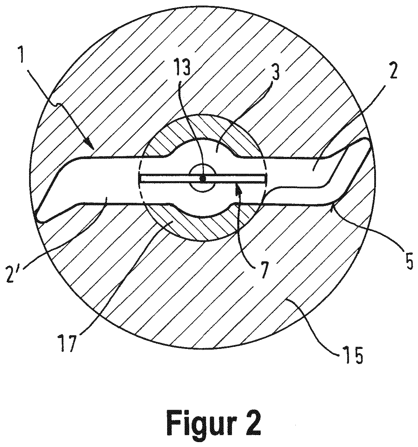

In einer vorteilhaften Ausführungsform, die in Figur 2 in Draufsicht von unten gezeigt ist, verläuft die Fräsrippe 7 radial über die Drehmitte der Klinge 1, erstreckt sich also auf beiden Messern 2, 2'. Mit dieser Ausführungsform verschwindet die passive Mittelzone (in der Figur nur noch als Punkt 13 angedeutet), sodass die für das Eindringen in die zu zerkleinernde Speise aufzubringende Druckkraft nur noch von der Schleiffläche der Fräsrippe abhängt, welche sehr gering ist. Die Fräsrippe kann in diesem Fall durch ein auf die Klinge aufgeschweißtes Blech gebildet werden. Das Blech kann dabei rechteckig sein, aber es ist auch denkbar, dass die axiale Höhe der Fräsrippe 7 von der Drehmitte nach außen hin abnimmt.

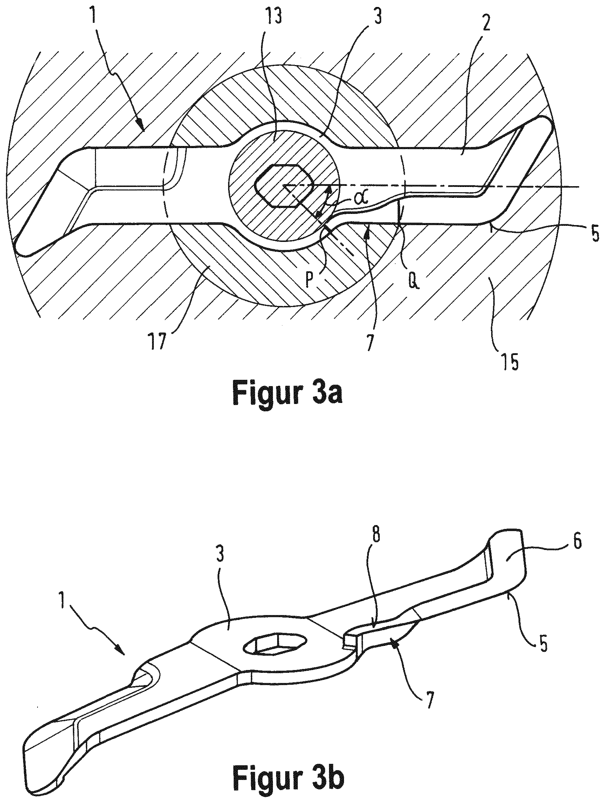

Gemäß einer bevorzugten Ausführungsform, die in den Figuren 3a und 3b dargestellt ist, ist die axial vorstehende Fräsrippe 7 nicht radial, sondern in der Verlängerung der Schneidkante 5 angeordnet, wobei sie an einer von der Erstreckung der Messer 2, 2' um α = 45° gedrehten Position P beginnt und zunächst im Wesentlichen tangential entlang des Randes der Nabe 3 (des die Nabe bildenden Blechs) und dann entlang der Vorderkante des Messers 2 bis zum inneren Ende der Schneidkante 5 verläuft. Diese Ausrichtung der Fräsrippe 7 hat zur Folge, dass der Schlagwinkel an der Position P fast 90° beträgt (Normale auf die "vorwärts" gewandte Fläche der Fräsrippe ist senkrecht zur Drehrichtung) und dann bis zum Punkt Q am inneren Ende der Schneidkante auf etwa 20° abnimmt.

Die axial gewandte Schleiffläche 8 der Fräsrippe 7 und die axial gewandte Schleiffläche 6 der Schneidkante 5 bilden zusammen eine Gesamtschleiffläche, deren Minimierung ebenso wie die Minimierung der passiven Mittelzone dazu beiträgt, die für das Eindringen in die Speise notwendige Kraft möglichst gering zu halten. Wiederum kann die Fräsrippe aus dem Klingenblech heraus abgewinkelt sein, wie bereits in Zusammenhang mit der Figur 1b) erwähnt, oder wie gezeigt direkt herausgestanzt und überschliffen sein, was in beiden Fällen aufgrund der geringen Blechdicke (ca. 2mm) des zur Herstellung der Klinge 1 verwendeten Blechs eine nur sehr geringe Schleiffläche 8 und somit einen sehr geringen Beitrag zur Gesamtschleiffläche bedeutet.

Wie in der hier dargestellten Ausführungsform gezeigt ist, geht die Oberfläche der Schneidkante 5 (die mit der Rotationsebene/Schleiffläche 6 den Keilwinkel bildet) kontinuierlich in die Fräsrippe 7 über, das heißt der Keilwinkel im Bereich des Übergangs von der Schneidzone 15 zur Fräszone 17 wächst kontinuierlich vom Keilwinkel des Messers 2, hier 20°, bis auf einen Winkel von 90° an, unter welchem die Fräsrippe 7 aus der Rotationsebene der Klinge 1 emporsteht (siehe die in Drehrichtung gewandte senkrechte Stirnfläche der Fräsrippe 7 in Figur 3b). Gleichzeitig kann sich die Breite der Schleiffläche 6 der Schneidkante 5 in der Rotationsebene beim genannten Übergang auf eine der Blechdicke entsprechende Breite verringern, was einer Minimierung der Gesamtschleiffläche zugutekommt.

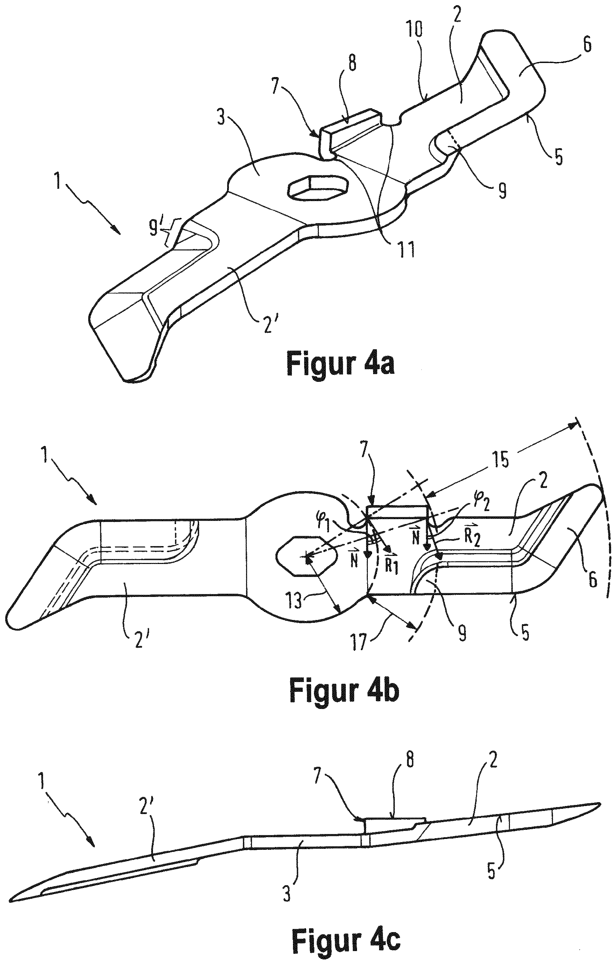

In den Fig. 4a bis 4c ist eine besonders bevorzugte Ausführungsform der erfindungsgemäßen Klingenanordnung gezeigt, bei welcher die Fräsrippe 7 an der zur Schneidkante 5 gegenüberliegenden Kante 10 axial emporsteht. Die Fräsrippe 7 liegt also an der in Rotationsrichtung hinteren Seite des Messers 2. Der Schlagwinkel der Fräsrippe 7 ist, da sie nicht entlang eines Radius verläuft, variabel und beträgt am inneren Ende der Rippe ϕ₁ = 30° (Winkel zwischen der Normalen auf die Fräskante *̅N̅*̅, und der Rotationsrichtung *̅R̅*̅₁), während er am äußeren Ende auf ϕ₂ = 15° abnimmt. Die Wahl dieser Winkel vereint eine gute Fräsleistung mit einem akzeptablen Drehwiderstand, welcher insbesondere bei festeren Speisen nicht zu hoch werden darf. In diesem Ausführungsbeispiel ist im Gegensatz zu den Figuren 3a und 3b die axial gewandte Schleiffläche 8 der Fräsrippe 7 von der Schleiffläche 6 der Schneidkante 5 getrennt und am weitesten von ihr entfernt. Die Schleiffläche 8 ist hierbei, wie in der Seitenansicht der Figur 4c zu erkennen ist, horizontal, d.h. erstreckt sich parallel zur Rotationsebene der Klingenanordnung, während die beiden Messer 2 und 2' der Klingenanordnung jeweils nach unten bzw. oben gegenüber dem Nabenabschnitt 3 abgewinkelt sind (N.B.: in der Figur "über Kopf" dargestellt).

Die Fräsrippe 7 wird, wie in der Draufsicht der Fig. 4b gut erkennbar ist, an der Klinge innen und außen von Einkerbungen 11 umgeben, welche vom Stanzwerkzeug bei der Herstellung erzeugt werden und beim Emporbiegen der Fräsrippe ein Einreißen aufgrund zu kleiner Biegeradien oder ein Verbiegen des Messers 2 verhindern. Weiterhin ist gut die Aufteilung in Zonen ersichtlich, wobei die radial außen liegende Schneidzone 15 durch den Umlauf der Schneidkante 5 definiert wird. An die unveränderte Schneidkante 5 (das heißt solange der Keilwinkel im Wesentlichen konstant ist) schließt sich ein Übergangsbereich 9 an, an dem sich der Keilwinkel von den beispielsweise 20° der Schneidkante wie auch in Fig. 1 bis 3 bis auf 90° erhöht. Da dieser Bereich aufgrund des rasch auf 90° ansteigenden Keilwinkels keine Schneidwirkung entfaltet, erstreckt sich die Schneidzone 15 wie in Fig. 4b gezeigt nur bis zur Grenze zwischen Schneidkante 5 und Übergangsbereich 9. Der Anstieg des Keilwinkels ist auch gut an dem in Fig. 4a sichtbaren Übergangsbereich 9' am anderen Messer 2' sichtbar. Die durch den Umlauf der Fräsrippe 7 gebildete Fräszone 17 hingegen grenzt unmittelbar an die Schneidzone 15 an, ohne diese zu überlappen. Nach innen schließt sich an die Fräszone 17 noch die passive Mittelzone 13 an, die hier vollständig von der Nabe 3 definiert wird.

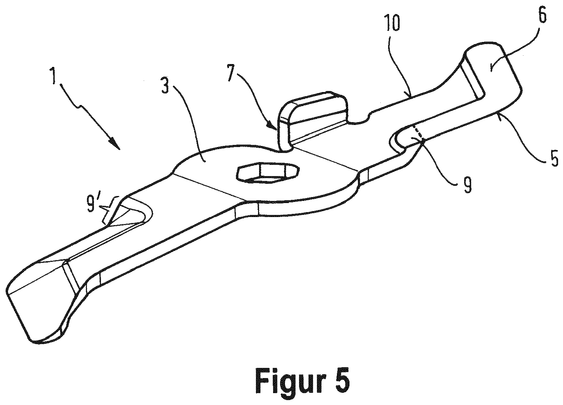

Schließlich ist in Figur 5 eine Ausführungsform dargestellt, bei welcher die Fräsrippe 7 - durch eine entsprechende Ausgestaltung des Stanzwerkzeugs -verlängert ist. Dadurch steht mehr Angriffsfläche zur Verfügung, um die Fräskante nach dem Stanzen empor zu biegen, was den Biegevorgang genauer und einfacher macht.

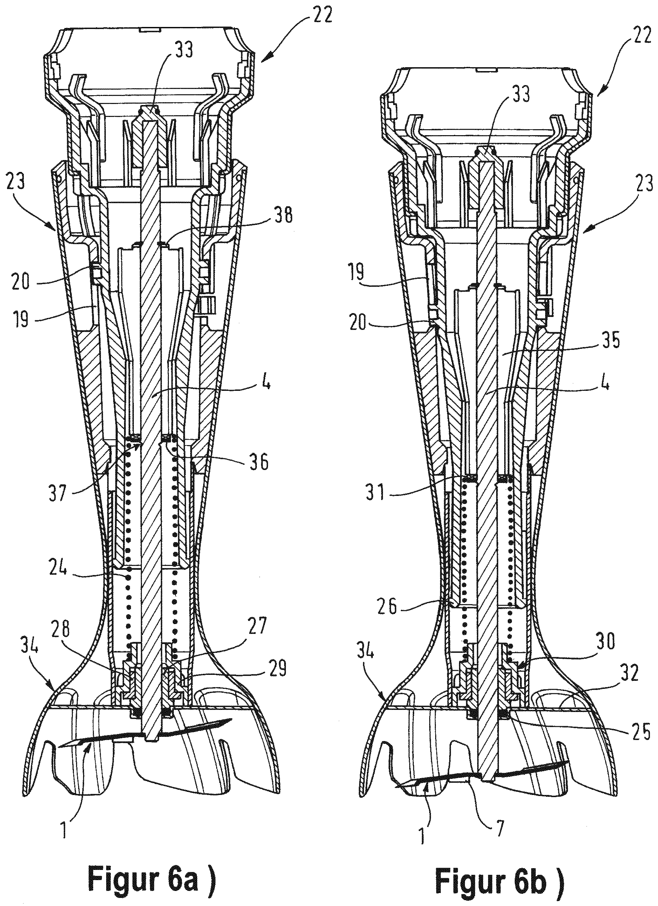

In Figuren 6a) und 6b) ist schließlich eine besonders bevorzugte Kombination der erfindungsgemäßen Klingenanordnung mit einem Stabmixer gezeigt, welcher einen in eine innere Baugruppe 22 und in eine äußere Baugruppe 23 unterteilten Schaft aufweist. Die innere Baugruppe 22 kann sich dabei teleskopartig in die äußere Baugruppe 23 hinein und aus ihr hinaus bewegen. Wie in der Längsschnittansicht des Schafts in den Figuren 6a) und 6b) zu erkennen ist, wird die Welle 4 in der inneren Baugruppe 22 geführt und über ein Axiallager 31 in dieser gelagert. Die innere Baugruppe 22 ist darüber hinaus so ausgestaltet, dass sie mit dem hier nicht gezeigten Motorgehäuse des Stabmixers, der gleichzeitig den Griff für den Benutzer darstellt, lösbar gekoppelt werden kann, wobei im gekoppelten Zustand keine Relativbewegung zwischen Motorgehäuse und innerer Schaftbaugruppe 22 erlaubt wird. Dabei wird auch die Welle 4 über die Wellenkupplung 33 mit der Motorwelle verbunden.

Am unteren Ende der äußeren Baugruppe 23 befindet sich eine glockenförmige Abschirmung 34 für die am unteren Ende der Welle 4 befestigte Klingenanordnung (Schneidmesser) 1, die von der Abschirmung (Glocke) 34 bevorzugt vollständig umschlossen wird. Die Abschirmung weist innen eine Abdeckplatte 32 auf, die mit der Abschirmung 34 einen gegenüber der äußeren Baugruppe 23 abgedichteten Bearbeitungsraum definiert. Des Weiteren befindet sich in der äußeren Baugruppe ein Radialgleitlager 27 in unmittelbarer Nähe zum Schneidmesser 1, da hier der Momenteintrag am größten ist. Hier ist das Radialgleitlager 27 an der Abdeckplatte 32 der Abschirmung 34 vorgesehen, da diese Komponente dem Schneidmesser 1 am nächsten liegt. Das Radialgleitlager 27 ist in einer flexiblen Bundbuchse 28 gelagert, die von einer Lagerhülse 29 umgeben ist, welche die Buchse 28 und das Radialgleitlager 27 an der Abdeckplatte 32 fixiert. Radialgleitlager 27, Bundbuchse 28 und Lagerhülse 29 bilden eine Lagerbaugruppe 30. Die flexible Bundbuchse 28 lässt eine geringe Rotation des Radialgleitlagers 27 um einen imaginären Drehpunkt im Zentrum zu. Wird das hier nicht gezeigte Motorteil auf den Schaft aufgesteckt, wird die Welle 4 im oberen Bereich über die Wellenkupplung koaxial zur Motorwelle gezwungen. Aufgrund von fertigungsbedingten Toleranzen oder bei Exzentrizität des Motors zu der Adaption würde sich eine "fest" eingespannte Welle ohne flexible Bundbuchse leicht verbiegen. Dies würde wiederum im Betrieb zu einem höheren Verschleiß des Lagers und einer erhöhten Geräuschentwicklung führen. Die "weiche" Lagerung mithilfe der flexiblen Bundbuchse 28 schafft hier Abhilfe und die Lagerbaugruppe 30 mit Bundbuchse 28 ist somit in der Lage, die in der Fertigung üblichen Toleranzen oder die durch einen exzentrisch angekoppelten Motor bedingten Kräfte auszugleichen.

Eine innen in der inneren Baugruppe 22 liegende Feder 24 stützt sich unten über eine Lagerbaugruppe 30 mit dem Radialgleitlager 27 an der äußeren Baugruppe 23 ab und liegt oben an der Innenseite der inneren Baugruppe 22 an, so dass sie die beiden Baugruppen in eine Vorzugslage zwingt, bei der die innere Baugruppe 22 aus der äußeren Baugruppe 23 oben herausgedrückt wird und so das Schneidmesser 1 in seine oberste Position im Bearbeitungsraum bringt (siehe Fig. 6a). Die Lagerbaugruppe 30 wird dabei durch die auf die Lagerhülse 29 drückende Feder 24 in Position gehalten. Die Endanschläge für diesen Hub sind an der Innenseite der äußeren Baugruppe 23 in Form von vier über den Umfang verteilten Längsnuten 19 (Längsführungen) angebracht. In diesen laufen auf der Außenseite der inneren Baugruppe 22 entsprechend angebrachte Rippen 20 (Führungselemente). Die vier Rippen 20, von denen in den Fig. 6a) und 6b) jeweils zwei sichtbar sind, erfüllen zwei Funktionen und sind in zwei gegenüberliegende Pärchen aufgeteilt. Das eine Pärchen bestimmt die Endposition der inneren Baugruppe 22 in der durch die Feder 24 aufgezwungenen Vorzugslage und dient zudem dem einmaligen Hinterrasten bei der Montage der Baugruppe. Das zweite Rippenpärchen verhindert das Verdrehen der inneren Baugruppe relativ zur äußeren Baugruppen ("Misuse"). In einer hier nicht gezeigten Alternative sind nur zwei Längsnuten an der Innenseite der äußeren Baugruppe und entsprechend zwei Rippen an der Außenseite der inneren Baugruppe vorgesehen, wobei eine Kombination Längsnut-Rippe die axiale Endposition der inneren Baugruppe bestimmt und die andere Kombination Längsnut-Rippe das gegenseitige Verdrehen der beiden Baugruppen verhindert.

Da die Anforderungen an die Koaxialität der Wellenkupplung hoch sind, sind im oberen Bereich der inneren Baugruppe 22 Zentrierrippen 35 als Zentriermittel angebracht, welche die Welle radial in einem schmalen Intervall "vorzentrieren". Dies ist sinnvoll um das "Einfädeln" der hier nicht gezeigten Wellenkupplung am Motorgehäuse auf der Wellenkupplung 33 des Schafts zu erleichtern. Aus Gründen der Funktionsintegration bilden diese Zentrierrippen 35 auch die Anlagefläche des Axiallagers 31. Die Kraftübertragung vom Axiallager 31 auf die Welle 4 wird über eine U-Scheibe 36 und eine Rollung auf der Welle 4 bewerkstelligt (siehe Figuren 3a und 3b). Die Rollung resultiert in einer Einschnürung auf der Welle sowie in jeweils einem Wulst 37 vor und nach der Einschnürung verdrängtem Material, das über den Wellendurchmesser ragt. Somit passt es nicht mehr durch die relativ eng anliegende U-Scheibe. Durch eine Sicherungsscheibe 38 auf der Welle 4 oberhalb der Zentrierrippen 35 der inneren Baugruppe 22 wird die Welle 4 in der inneren Baugruppe 22 axial fixiert. Die äußere Baugruppe 23 verfügt des Weiteren über eine Wellendichtung 25, um die Verschmutzung über die Wellenbenetzung zu reduzieren.

Die zur gegenseitigen axialen Verschiebung notwendige Lagerung der beiden Baugruppen 22 bzw. 23 erfolgt an zwei Stellen über Gleitlager 26 einfacher Geometrie, wobei die am unteren Ende der inneren Baugruppe 22 vorgesehene Gleitlagerhälfte zum Beispiel durch eine den Umfang teilweise überragende Aufweitung und die gegenüberliegende Gleitlagerhälfte durch eine an der Innenseite der äußeren Baugruppe 23 befestigte zylindrische Gleithülse dargestellt wird. Das obere Gleitlager am oberen Ende der inneren Baugruppe 22 ist in den Schnittansichten der Figuren 6a) und b) nicht sichtbar. Hier können über den Umfang verteilte Vorsprünge vorgesehen sein, die sich gegen eine glatte Lagerfläche an der Innensite des oberen Teils der äußeren Baugruppe 23 abstützen. Eine mögliche Gleitpaarung erfolgt hierbei zwischen zwei unterschiedlichen Kunststoffen, die andere mögliche Gleitpaarung zwischen Kunststoff und Metall (z.B. Edelstahl). Die Lagerstellen 26 sind so weit auseinander angebracht wie es der Bauraum zulässt, um eine Selbsthemmung im Gebrauch zu verhindern.

Bei dem oben beschriebenen Aufbau wird zum einen die Position des Schneidmessers 1 in der Ausgangslage im Vergleich zu der üblichen Position nach oben (vom Behälterboden weg) verlagert (Fig. 6a), um den Sog auf den Behälterboden zu verringern, und zum anderen lässt der Schaft durch die Zweiteilung eine axiale Bewegung des Messers 1 Richtung Behälterboden gegen die Kraft der Feder 24 zu. Drückt der Bediener während des Betriebs axial auf das gleichzeitig als Griff dienende Motorgehäuse, das mit der inneren Baugruppe 22 verbunden ist, ist der montierte Schaft in der Lage, diesen Weg durch die innere Baugruppe 22 über die axial unbeweglich in ihr gelagerte Welle 4 auf das Messer zu übertragen. Die äußere Geometrie der äußeren Baugruppe 23 kann dabei unverändert bleiben. Dazu taucht die innere Baugruppe 22 einen gewissen Weg in die äußere Baugruppe 23 ein (Fig. 6b), bis die innere Baugruppe 22 dort an einen definierten, durch das Zusammenwirken von Längsnuten 19 und Rippen 20 gebildeten Anschlag kommt. Somit kann in der Vorzugslage, bei der kein Druck vom Benutzer auf den Schaft ausgeübt wird und das Schneidmesser 1 sich in der obersten Position im Bearbeitungsbereich in der Abschirmung 34 befindet (Fig. 6a), der Sog massiv verringert werden und gleichzeitig durch den axial möglichen Hub der Arbeitsbereich des Schneidmessers 1 nach unten vergrößert werden, um beispielsweise an schwer erreichbare Speisestücke zu gelangen.

## Patentansprüche

1. Stabmixer, umfassend eine Klingenanordnung für ein Haushaltsgerät zum Schneiden und Zerkleinern von Nahrungsmitteln, die Klingenanordnung umfassend eine drehbare Klinge (1) mit einer an der Drehmitte der Klinge (1) liegenden Nabe (3) zur Aufnahme einer Welle (4), wobei die Klinge (1) zumindest ein sich radial erstreckendes Messer (2) aufweist, welches eine an einer in Rotationsrichtung vorderen Seite liegende und im Umlauf eine kreisförmige Schneidzone (15) definierende Schneidkante (5) besitzt,
**dadurch gekennzeichnet, dass**
die Klinge (1) eine Fräsrippe (7) aufweist, die in einer axialen Richtung aus der Klinge (1) emporsteht und so orientiert ist, dass sie im Umlauf eine Fräswirkung erzeugt und eine entsprechende Fräszone (17) definiert, die sich von der Nabe (3) bis zur Schneidzone (15) des Messers (2) erstreckt.

2. Stabmixer nach Anspruch 1, wobei der Schlagwinkel der Fräsrippe (7) zwischen 0° und 45°, bevorzugt zwischen 0° und 35° beträgt.

3. Stabmixer nach Anspruch 1 oder 2, wobei die Fräsrippe (7) radial verläuft.

4. Stabmixer nach Anspruch 1, 2 oder 3, wobei die Klinge (1) zwei gegenüberliegende Messer (2, 2') aufweist und die Fräsrippe (7) über die Drehmitte der Klinge (1) verläuft.

5. Stabmixer nach einem der vorangehenden Ansprüche, wobei die Schneidkante (5) einen spitzen Keilwinkel von weniger als 45°, bevorzugt weniger als 20° besitzt.

6. Stabmixer nach Anspruch 1 oder 2, wobei sich die Fräsrippe (7) von einer Position am Rand der Nabe (3), die in Bezug auf die Drehmitte unter einem Winkel (a) von bevorzugt 45° zur radialen Mittelachse des Messers (2, 2') liegt, bis zur Schneidkante (5) erstreckt.

7. Stabmixer nach Anspruch 6, wobei der Keilwinkel zwischen der Rotationsebene und einer Oberfläche des Messers (2, 2') von der Schneidkante (5) zur Fräsrippe (7) übergehend kontinuierlich von 20° bis auf 90° anwächst.

8. Stabmixer nach einem der Ansprüche 1, 2 oder 3, wobei die Fräsrippe (7) an der in Rotationsrichtung hinteren Seite des Messers (2) angeordnet ist.

9. Stabmixer nach einem der vorangehenden Ansprüche, wobei die Dicke der Fräsrippe (7) der Dicke des die Klinge (1) bildenden Blechs entspricht.

10. Stabmixer nach einem der vorhergehenden Ansprüche, umfassend:
einen in einem Motorgehäuse angeordneten Antriebsmotor,
einen Schaft, in welchem die mit dem Antriebsmotor drehstarr verbindbare Welle (4) gelagert ist und der in eine innere und äußere Baugruppe (22, 23) unterteilt ist, wobei die äußere Baugruppe (23) am vom Motorgehäuse entfernten Ende eine Abschirmung (32) aufweist, welche die fest mit der Welle (4) verbundene Klinge (1) umgibt,
wobei die Welle (4) in der inneren Baugruppe (22) axial unbeweglich geführt wird und die innere Baugruppe (22) gegenüber der äußeren Baugruppe (23) axial beweglich ist.

11. Stabmixer nach Anspruch 10, wobei die Welle (4) über ein Axiallager (31) in der inneren Baugruppe (22) gelagert ist und die Kraftübertragung vom Axiallager (31) auf die Welle (4) über eine an der Welle (4) angebrachte Sicherung erfolgt.

12. Stabmixer nach Anspruch 10 oder 11, wobei die äußere Baugruppe (23) am ihrem vom Motorgehäuse entfernten Ende ein radiales Gleitlager (27) für die Welle (4) aufweist, das bevorzugt in einer flexiblen Buchse (28) gegenüber der äußeren Baugruppe (23) abgestützt ist.

13. Stabmixer nach Anspruch 10, 11 oder 12, wobei zwischen der inneren und der äußeren Baugruppe (22, 23) ein elastisches Element (24) vorgesehen ist, dass die äußere Baugruppe (23) gegenüber der inneren Baugruppe (22) axial vorspannt.

## Claims

1. Hand blender comprising a blade arrangement for a household appliance for cutting and chopping food, the blade arrangement comprising a rotatable blade (1) with a hub (3) located at the centre of rotation of the blade (1) receiving a shaft (4), wherein the blade (1) has at least one radially extending knife (2) which has a cutting edge (5) on a front side, in the direction of rotation, defining, on rotation, a circular cutting zone (15),
**characterised in that**
the blade (1) has a milling rib (7) which stands up from the blade (1) in an axial direction and is oriented in such a way that it creates a milling effect on rotation and defines a corresponding milling zone (17) which extends from the hub (3) up to the cutting zone (15) of the knife (2) .

2. Hand blender according to claim 1, wherein the angle of attack of the milling rib (7) is between 0° and 45°, preferably between 0° and 35°.

3. Hand blender according to claim 1 or 2, wherein the milling rib (7) runs radially.

4. Hand blender according to claim 1, 2 or 3, wherein the blade (1) has two opposing knives (2, 2') and the milling rib (7) runs through the centre of rotation of the blade (1).

5. Hand blender according to one of the preceding claims, wherein the cutting edge (5) has an acute wedge angle of less than 45°, preferably less than 20°.

6. Hand blender according to claim 1 or 2, wherein the milling rib (7) extends from a position at the edge the hub (3) which, in relation to the centre of rotation, lies at an angle (a) of preferably 45° to the radial centre axis of the knife (2, 2'), up to the cutting edge (5).

7. Hand blender according to claim 6, wherein the wedge angle between the rotational plane and a surface of the knife (2, 2') increases continuously from 20° to 90° over the transition from the cutting edge (5) to the milling rib (7).

8. Hand blender according to one of the claims 1, 2 or 3, wherein the milling rib (7) is arranged on the rear side of the knife (2) in the direction of rotation.

9. Hand blender according to one of the preceding claims, wherein the thickness of the milling rib (7) corresponds to the thickness of the sheet metal forming the blade (1).

10. Hand blender according to one of the preceding claims, comprising:
a drive motor arranged in a motor housing,
a socket in which the shaft (4), connectable in a torsionally rigid manner with the drive motor, is mounted and which is divided into an inner and outer assembly (22, 23), wherein the outer assembly (23) has a shield (32) at the end opposite the motor housing which surrounds the blade (4) which is connected in a fixed manner to the shaft (1),
wherein the shaft (4) is guided in the inner assembly (22) in an axially immovable manner and the inner assembly (22) is axially movable in relation to the outer assembly (23) .

11. Hand blender according to claim 10, wherein the shaft (4) is mounted in the inner assembly (22) via an axial bearing (31) and the transmission of force from the axial bearing (31) to the shaft (4) is effected via a securing means attached to the shaft (4).

12. Hand blender according to claim 10 or 11, wherein the outer assembly (23) has at its end opposite the motor housing a radial slide bearing (27) for the shaft (4) which is preferably supported against the outer assembly (23) in a flexible socket (28).

13. Hand blender according to claim 10, 11 or 12, wherein an elastic element (24) is provided between the inner and the outer assembly (22, 23) that axially preloads the outer assembly (23) against the inner assembly (22).

## Revendications

1. Mixeur plongeant, comprenant un ensemble de lames pour un appareil ménager pour couper et hacher des aliments, l'ensemble de lames comprenant une lame rotative (1) muni d'un moyeu (3) situé au centre de rotation de la lame (1) pour recevoir un arbre (4), dans lequel la lame (1) présente au moins un couteau (2) s'étendant radialement, lequel possède un bord de coupe (5) situé sur un côté avant dans la direction de rotation et définissant une zone de coupe circulaire (15) en rotation,
**caractérisé en ce que**
la lame (1) présente une nervure de fraisage (7) qui fait saillie de la lame (1) dans une direction axiale et qui est orientée de manière à produire un effet de fraisage en rotation et à définir une zone de fraisage correspondante (17) qui s'étend du moyeu (3) à la zone de coupe (15) du couteau (2).

2. Mixeur plongeant selon la revendication 1, dans lequel l'angle de battement de la nervure de fraisage (7) est compris entre 0° et 45°, de préférence entre 0° et 35°.

3. Mixeur plongeant selon la revendication 1 ou 2, dans lequel la nervure de fraisage (7) s'étale radialement.

4. Mixeur plongeant selon la revendication 1, 2 ou 3, dans lequel la lame (1) présente deux couteaux opposés (2, 2') et la nervure de fraisage (7) s'étale sur le centre de rotation de la lame (1).

5. Mixeur plongeant selon l'une quelconque des revendications précédentes, dans lequel le bord de coupe (5) possède un angle de calage aigu inférieur à 45°, de préférence inférieur à 20°.

6. Mixeur plongeant selon la revendication 1 ou 2, dans lequel la nervure de fraisage (7) s'étend depuis une position au niveau du bord du moyeu (3), qui se trouve à un angle (a) de préférence de 45° par rapport à l'axe central radial du couteau (2, 2') par rapport au centre de rotation, jusqu'au bord de coupe (5).

7. Mixeur plongeant selon la revendication 6, l'angle de calage entre le plan de rotation et une surface du couteau (2, 2') augmente de manière continue de 20° à 90° en passant du bord de coupe (5) à la nervure de fraisage (7).

8. Mixeur plongeant selon l'une quelconque des revendications 1, 2 ou 3, dans lequel la nervure de fraisage (7) est agencée sur le côté arrière du couteau (2) dans le sens de la rotation.

9. Mixeur plongeant selon l'une quelconque des revendications précédentes, dans lequel l'épaisseur de la nervure de fraisage (7) correspond à l'épaisseur de la feuille formant la lame (1).

10. Mixeur plongeant selon l'une quelconque des revendications précédentes, comprenant :
un moteur d'entraînement agencé dans un carter de moteur,
une tige, dans laquelle est monté l'arbre (4) pouvant être relié au moteur d'entraînement de manière solidaire en rotation et qui est divisée en un assemblage intérieur et extérieur (22, 23), dans lequel l'assemblage extérieur (23) présente, à l'extrémité éloignée du carter du moteur, un blindage (32) qui entoure la lame (1) reliée de manière solidaire à l'arbre (4),
dans lequel l'arbre (4) est guidé axialement de manière immobile dans l'assemblage intérieur (22) et l'assemblage intérieur (22) est mobile axialement par rapport à l'assemblage extérieur (23).

11. Mixeur plongeant selon la revendication 10, dans lequel l'arbre (4) est monté dans l'assemblage intérieur (22) par l'intermédiaire d'un palier de butée (31) et la transmission de force du palier de butée (31) à l'arbre (4) est effectuée par l'intermédiaire d'un dispositif de verrouillage fixé à l'arbre (4).

12. Mixeur plongeant selon la revendication 10 ou 11, dans lequel l'assemblage extérieur (23) présente, à son extrémité éloignée du carter du moteur, un palier lisse radial (27) pour l'arbre (4), qui est de préférence supporté dans une douille flexible (28) par rapport à l'assemblage extérieur (23).

13. Mixeur plongeant selon la revendication 10, 11 ou 12, dans lequel un élément élastique (24) est prévu entre l'assemblage intérieur et extérieur (22, 23), qui sollicite axialement l'assemblage extérieur (23) par rapport à l'assemblage intérieur (22).
